# EUROPEAN PATENT SPECIFICATION

(11) **EP 2 194 185 B1**
(45) Date of publication and mention of the grant of the patent: **26.10.2016**
(21) Application number: 09705037.1
(22) Date of filing: 29.01.2009
(51) Int. Cl.: D06M 14/22, C09K 21/10, C09K 21/12, C09K 21/14, D06M 10/00, D06M 10/08, D06M 11/58, D06M 13/282, D06M 13/313, D06M 13/325, D06M 15/61, D06M 101/06, D06M 11/60, D06M 15/356, D06M 13/46

(54) **FLAME RETARDANT PROCESSING METHOD, AND CELLULOSIC FIBER MATERIAL IMPARTED WITH FLAME RETARDANCY**
FLAMMENHEMMENDES VERARBEITUNGSVERFAHREN UND MIT FLAMMENRESISTENZ AUSGESTATTETES ZELLULOSEFASERMATERIAL
PROCÉDÉ D'IGNIFUGATION ET MATIÈRE FIBREUSE CELLULOSIQUE IGNIFUGE

(30) Priority: 30.01.2008 JP 2008019152
(43) Date of publication of application: 09.06.2010
(73) Proprietor: Kurashiki Boseki Kabushiki Kaisha, Kurashiki-shi Okayama 710-0054 (JP)
(72) Inventor: SUGIYAMA, Minoru, Neyagawa-shi Osaka 572-0823 (JP); OZAWA, Ichiro, Neyagawa-shi Osaka 572-0823 (JP); INOUE, Hiroaki, Yokohama-shi Kanagawa 226-0012 (JP); TOMOTANI, Yasushi, Osaka-shi Osaka 541-8581 (JP); KATSUEN, Susumu, Osaka-shi Osaka 541-8581 (JP); OHSHIMA, Kunihiro, Neyagawa-shi Osaka 572-0823 (JP)
(74) Representative: Hoffmann Eitle
(86) International application number: PCT/JP2009/051413
(87) International publication number: WO 2009/096444

(56) References cited:
- EP-A1- 0 441 675
- CN-A- 1 958 936
- JP-A- 5 163 673
- JP-A- 9 119 069
- JP-A- 52 144 389
- JP-A- 2003 049 366
- JP-A- 2003 183 659
- JP-B- 1 020 268
- JP-B- 4 003 472
- US-A- 3 925 274
- US-A- 4 086 385
- DATABASE WPI Week 199330 Thomson Scientific, London, GB; AN 1993-240356 XP002721344, & JP H05 163673 A (NISSHIN HIGH VOLTAGE KK) 29 June 1993 (1993-06-29)

## Description

### TECHNICAL FIELD

The present invention relates to a flame-retardant processing method and a cellulosic fiber material treated by the method.

### BACKGROUND ART

Conventional flame retardants commercially available were mainly used for treatment of polyester fibers and cannot be used in processing of natural fibers such as cotton and hemp and cellulosic fibers represented by regenerated fibers such as rayon. In addition, conventional flame retardants had problems such as insufficient flame resistant properties and high concentration of formaldehyde released therefrom, and there is no flame retardant that can be used, for example, on clothes that demand sufficiently high flame retardance and safety to the skin.

Methods of irradiating a fibrous material with radiation before or/and after addition of a flame retardant thereto were proposed as the flame-retardant processing methods (Patent Documents 1 to 4). The flame retardants used were, for example, vinyl phosphonate oligomers, vinyl phosphonate, phosphite compounds, vinyl phosphate compounds and the like.
Patent Document 1: JP-B No. 1-20268
Patent Document 2: JP-A No. 5-163673
Patent Document 3: JP-A No. 2001-254272
Patent Document 4: JP-A No. 2006-183166

US3925274 states that the abrasion resistance of cellulose and cellulose containing fabrics such as cotton and rayon is improved by graft copolymerizing diethylphosphatoethylmethacrylate and/or diethylphosphatoethylacrylate onto the cellulosic substrate.

EP0441675 relates to a grafted polymeric material comprising phosphate units. The starting polymeric material is, for example, based on polypropylene, cellulose or silk.

JP 05-163673 describes an aqueous solution containing a vinyl phosphonate oligomer (a flame-retardant) incorporated with phenoxyethyl acrylate or ethylene glycol diacrylate as a crosslinking agent. The obtained treating liquid is applied to a fiber or a woven cloth, dried and irradiated with electron ray in nitrogen gas atmosphere to effect the graft-polymerization of the vinyl phosphonate to the fiber and obtain a fiber having high durability and flame-retardance without generating free formaldehyde.

CN1958936 describes a vinyl organophosphorus flame retardant agent for anti-flaming finish of fabrics. Said flame retardant agent is mainly formed from vinyl phosphate, and has two types of water-soluble flame retardant agent and oil-soluble flame retardant agent. It can be used for making anti-flaming finish of fabrics by utilizing a chemical initiation process, electronic irradiation process and plasma initiation process.

US4086385 describes network polymers containing phosphorus and nitrogen deposited and fixed in cellulosic textiles by impregnating the textile with an aqueous solution of an oligomeric vinylphosphonate and a polyethyleneamine or polyethyleneimine and removing water from the impregnated textile to facilitate interaction between the chemical components, thus providing a process and a flame retarding composition for cellulosic textiles.

### Disclosure of the Invention

### Problems to be Solved by the Invention

However, fabrics treated by the conventional methods were not sufficient in flame retardance. There was a problem that, even if a fabric shows preferable flame retardance immediately after treatment, the flame retardance declines when it is washed. Washing of treated fabrics leads to distinct deterioration in the flame retardance. There was also a problem that hand feeling of the treated fabric becomes harder.

It is an object of the present invention to provide a flame-retardant processing method and a flame-retarding agent set for radiation treatment that can provide a sufficient flame retardance, and a flame-retarded cellulosic fiber material with sufficient flame retardance.

Another object of the present invention is to provide a flame-retardant processing method and a flame-retarding agent set for radiation treatment that can provide a sufficient flame retardance and a superior hand feeling, and a flame-retarded cellulosic fiber material with sufficient flame retardance and superior hand feeling.

In the present description, the flame retardance means a property to make a fiber less combustible or a property to make a fiber resistant to spreading of flame even if ignited.

### Means to Solve the Problems

The present invention relates to a flame-retardant processing method, comprising:
a radiation processing step of irradiating a cellulosic fiber material with radiation;
a phosphorus processing step of adding a radically polymerizable phosphorus-containing compound to the cellulosic fiber material; and
an amine processing step of adding an amine compound to the cellulosic fiber material.

The present invention also relates to a flame-retarded cellulosic fiber material, prepared by binding a radically polymerizable phosphorus-containing compound to a cellulosic fiber in addition reaction and binding an amine compound ionically to the bound and radically polymerizable phosphorus-containing compound.

The present invention also relates to a flame-retarding agent set for radiation treatment, comprising a radically polymerizable phosphorus-containing compound and an amine compound.

### Effect of the Invention

It is possible according to the flame-retardant processing method of the present invention to provide a cellulosic fiber material with improved flame retardance sufficiently, i.e., improved initial flame retardance and durability in flame retardance during washing. It is also possible to retain preferable hand feeling of the cellulosic fiber material sufficiently by controlling pH of a processing solution, a phosphorus content of a flame-retarded raw material and others.

### Best Mode for Carrying out the Invention

The flame-retardant processing method according to the present invention is characterized by comprising:
a radiation processing step of irradiating a cellulosic fiber material with radiation;
a phosphorus processing step of adding a radically polymerizable phosphorus-containing compound to the cellulosic fiber material; and
an amine processing step of adding an amine compound to the cellulosic fiber material.

The cellulosic fiber material to which the method according to the present invention is applied (hereinafter, referred to simply as fibrous material) is not particularly limited, if it is a raw material containing a cellulosic fiber. Examples of the cellulosic fibers include natural fibers such as cotton, linen, ramie, and other plant fibers, regenerated fibers such as rayon, polynosic, Modal, cupra and Tencel, semi-synthetic fibers including cellulosic fibers such as triacetate and diacetate; and the like. In particular, cellulosic fibers including natural cellulosic fibers, regenerated cellulosic fibers and cellulose derivatives such as acetate are preferable. The natural celluloses above include not only natural celluloses, but also mercerized celluloses and those treated with liquid ammonia. Examples of other fibers that may be included in the cellulosic fiber materials include animal fibers such as wool, mohair, cashmere and others; synthetic fibers such as polyester, polyethylene, polypropylene and acryl; and the like. The fibrous material may be in any shape, for example in the shape of cotton; in the shape of a yarn such as spun yarn, blended yarn or composite yarn; in the shape a fabric such as woven fabric, knitted fabric, or nonwoven fabric; or in the shape of a fiber product produced from the fabric.

The content of the cellulosic fiber in the cellulosic fiber material is normally 20 wt % or more, and preferably 50 wt % or more and more preferably 100% for further improvement in flame retardance.

In the present invention, the radiation processing step, the phosphorus processing step and the amine processing step may be carried out in any order. It is possible to provide sufficient flame retardance, even if the steps are carried out in any order. It is possibly because the radically polymerizable phosphorus-containing compound binds to the cellulosic fiber in addition reaction and the amine compound reacts with the bound and radically polymerizable phosphorus-containing compound region, even if the steps are carried out in any order. For example, if the phosphorus processing step is carried out before or after the radiation processing step, the radically polymerizable phosphorus-containing compound binds to the cellulosic fiber in addition reaction. The amine compound reacts with the regions of the radically polymerizable phosphorus-containing compound rapidly, when such bonds are formed in the presence of the amine compound. On the other hand, even if the amine processing step is carried out after formation of such bonds, the amine compound can react with the regions of the bound and radically polymerizable phosphorus-containing compound rapidly.

In the present invention, the detailed mechanism of the expression of flame retardance is yet to be understood, but may be based on the following mechanism: The fibrous material prepared by application of the method according to the present invention releases the amine compound region rapidly, decomposes the phosphorus-containing compound region in the combustion field to form phosphorus pentoxide, and thus forms a carbonized film on the surface of the cellulosic fiber. The carbonized film formed exhibits not only an adiabatic action of suppressing heat transfer into fiber, but also a shielding action of preventing diffusion of the combustible decomposition products generated within the fiber into the combustion field, thus preventing combustion by firing and exhibiting flame retardance. In addition, the amine compound regions are not substituted by sodium and calcium ions derived from laundry agent and water during washing, and possibly in this way, the flame retardance is improved drastically after washing. In the present invention, even when the bottom end of a vertically placed fibrous material is ignited with a flame blown vertically out of a gas burner according to vertical methane burner method, the raw material is carbonized, preventing combustion sufficiently. In the absence of the amine treatment, sodium and calcium ions and others derived from laundry agents and water react with and are adsorbed on the phosphorus-containing compound regions during washing. Such a fibrous material is resistant to release of sodium and calcium in the combustion field, inhibiting decomposition of the phosphorus compound and thus, reducing the flame retardance after washing.

In the present invention, a crosslinking step may be added for improvement of washing durability. The crosslinking step is preferably carried out after the radiation processing step, the phosphorus processing step and the amine processing step. After reaction with the amine compound and the radically polymerizable phosphorus-containing compound, the crosslinking compound crosslinks an amine compound with another amine compound by using excessive amino groups, thus further improving the flame-resisting action after washing.

Typical examples of the orders of the radiation processing step, the phosphorus processing step and the amine processing step include the followings:
(1) Radiation processing step - phosphorus processing step - amine processing step;
(2) Amine processing step - radiation processing step - phosphorus processing step;
(3) Radiation processing step - simultaneous phosphorus and amine treatment step in the same bath.
A crosslinking step may be added after the steps of (1) to (3).

The phosphorus processing step is carried out after the radiation processing step, for suppression of polymerization of the radically polymerizable phosphorus-containing compounds unbound to the fibrous material. In such a case, the amine treatment may be carried out before the radiation processing step, simultaneously with the phosphorus processing step in the same bath, or after the phosphorus processing step. The preferable operational order are the orders (1) and (2) for suppression of the reaction between the free-radically polymerizable phosphorus-containing compound and the amine compound with the simultaneous processing solution in the same bath.

Embodiments of the present invention when each of the orders above is employed will be described.

### First embodiment

The first embodiment of the present invention employs the order (1) above.

### Radiation processing step

First in the embodiment, the fibrous material is irradiated with a radiation. The irradiation makes it possible for the radically polymerizable phosphorus-containing compound to bind to the fibrous material chemically in addition reaction of the radically polymerizable groups in the phosphorus processing step described below. The radiation treatment generates radicals on the cellulosic fiber, and the generated radicals form chemical bonds of the radically polymerizable groups of the phosphorus-containing compound with the cellulosic fiber in the phosphorus processing step. The radicals on the cellulosic fiber are generated easily at the 5th carbon, and then at the 4th and 1st carbons, of the structural unit of the cellulose molecule, and the radicals are considered to be generated also at the 2nd, 3rd and 6th carbons. The radically polymerizable phosphorus-containing compound may bind to any carbon.

Examples of the radiation for use include particle beams such as electron beam, beta ray and alpha ray; ionizing radiation such as ultraviolet, X ray and gamma ray; and the like. In particular, use of electron beam is preferable from the viewpoint of easiness in handling, stability, and efficiency of radical generation.

The irradiation conditions of one time by the radiation are not particularly limited, if the bonds between the cellulosic fiber and the phosphorus-containing compound are formed, and for example, the irradiation may be carried out under strong conditions for a short period or under weak conditions for a long period. Specifically, when electron beam is irradiated, the exposure dose is normally 1 to 200 kGy, preferably 5 to 100 kGy, more preferably 10 to 50 kGy.

In particular, when electron beam is irradiated, the irradiation is preferably carried out under nitrogen atmosphere, and the electron beam may be irradiated on one side of raw materials, because the electron beam penetrates therein, but an additional radiation treatment is preferably carried out after the radiation, phosphorus and amine treatments according to the present invention, to make the treatment according to the present invention more reliable. If the radiation is irradiated additionally, the second irradiation is preferably carried out on the side opposite to the first irradiation side. If a crosslinking treatment is carried out, the second radiation treatment is preferably carried out before the crosslinking treatment.

Any electron beam irradiation equipment commercially available may be used and, for example, an electrocurtain-type electron beam irradiation equipment such as EC250/15/180L (manufactured by Iwasaki Electric Co., Ltd.), EC300/165/800 (manufactured by Iwasaki Electric Co., Ltd.), or EPS300 (manufactured by NHV Corporation) is used.

### Phosphorus processing step

A radically polymerizable phosphorus-containing compound is then added to the fibrous material. The radicals generated on the fiber transfer, as they are used as start points, to the radically polymerizable groups of the phosphorus-containing compound, consequently forming chemical bonds between the phosphorus-containing compounds and the cellulosic fiber. The radical transferred to a radically polymerizable group of the phosphorus-containing compound binds to the radically polymerizable group of another phosphorus-containing compound, which may occur in chained manner. If the chain reaction progresses to some extent, termination reactions occur by binding between terminal radicals and also between the terminal radical and other cellulose radicals.

The radically polymerizable phosphorus-containing compound (may be referred to simply as phosphorus-containing compound in the present description) is a compound containing a radically polymerizable group and a phosphorus atom in the molecule. The radically polymerizable group is a functional group having a radically-polymerizable carbon-carbon double bond, and examples thereof include vinyl, (meth)acryloyl, allyl and other groups.

The phosphorus-containing compound for use is, for example, an unsaturated organic phosphoric ester, and typical examples thereof preferably used include vinyl phosphate compounds represented by General Formula (1) (hereinafter, referred to as vinyl phosphate compounds (1) ).

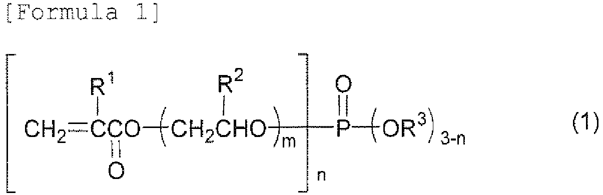

In General Formula (1), R¹ and R² each independently represent a hydrogen atom or a methyl group; preferably, R¹ represents a methyl group and R² a hydrogen atom.

R³ represents a hydrogen atom or an alkyl group having 1 to 6 carbon atoms or allyl group that may have a substituent, preferably a hydrogen atom.

The letter "n" means 1 or 2.

The letter "m" means an integer of 1 to 6, preferably an integer of 1 to 3, and more preferably 1.

For example, the bonding formation formed when the vinyl phosphate compound (1) wherein n=1 is bound to the fibrous material is described below. In the present description, the term "Cell" represents cellulose.

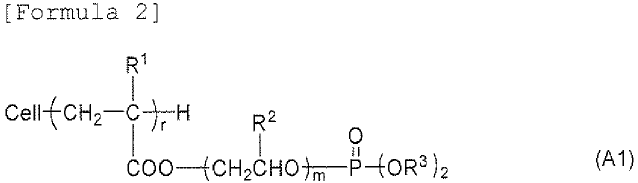

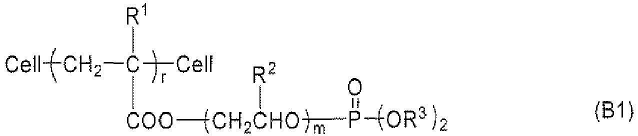

R¹, R², R³, n, m and r in General Formulae (A1) and (B1) are respectively the followings:
R¹, R², R³, n and m are the same as those described in General Formula (1).
The letter "r" means an integer of 1 or more.

Typical examples of preferable vinyl phosphate compounds (1) include mono(2-acryloyloxyethyl) phosphate, mono (2-methacryloyloxyethyl) phosphate, bis(2-acryloyloxyethyl) phosphate, bis(2-methacryloyloxyethyl) phosphate, diethyl-(2-acryloyloxyethyl) phosphate, diethyl-(2-methacryloyloxyethyl) phosphate, diphenyl-(2-acryloyloxyethyl) phosphate, diphenyl-(2-methacryloyloxyethyl) phosphate, polyalkylene glycol (2-acryloyloxyethyl) phosphate, polyalkylene glycol (2-methacryloyloxyethyl) phosphate and the like.

Vinyl phosphate compounds are commercially available.

For example, mono(2-methacryloyloxyethyl) phosphate and bis(2-methacryloyloxyethyl) phosphate are available from Sigma Aldrich Japan K.K. and Kyoeisha Chemical Co., Ltd.

For example, a mixture of mono(2-methacryloyloxyethyl) phosphate and bis(2-methacryloyloxyethyl) phosphate is available as "ALBRITECT^{™}6835" (manufactured by Rhodia Nicca, Ltd.).

For example, mono(2-methacryloyloxyethyl) phosphate is available as "Phosmer M" (manufactured by Uni-Chemical Co., Ltd.).

For example, polyalkylene glycol (2-acryloyloxyethyl) phosphate is available as "SIPOMER PAM-100" (manufactured by Rhodia Nicca, Ltd..).

For example, polyethylene glycol (2-methacryloyloxyethyl) phosphate is available as "Phosmer PE" (manufactured by Uni-Chemical Co., Ltd.).

The phosphorus-containing compound is normally added to the fibrous material in the form of aqueous solution. The concentration of the phosphorus-containing compound in the aqueous solution is not particularly limited, if the object of the present invention is achieved, and preferably, for example, 10 to 70 wt %, particularly 20 to 60 wt % with respect to the total amount of the aqueous solution. A phosphorus-containing compound may be used alone, or two or more kinds of them may be used in combination. If two or more phosphorus-containing compounds are used, the total amount thereof is preferably in the range above.

The method of adding the phosphorus-containing compound is not particularly limited, if the raw material is dipped with the aqueous solution, and, for example, a method of dipping the raw material in the aqueous solution and squeezing it, a method of coating the aqueous solution on the material, a method of spraying the aqueous solution thereon, or the like may be used. It is preferable to employ the method of dipping the raw material in the aqueous solution and squeezing it, for imparting the flame retardance easily and uniformly.

The pick up of the aqueous phosphorus-containing compound solution into the raw material is not particularly limited, if the object of the present invention is achieved, and normally, may be lower when the concentration of the phosphorus-containing compound in the aqueous solution is larger. When the concentration of the phosphorus-containing compound is lower, the pick up is set to a larger value. For example when the aqueous solution concentration is set to the concentration described above, the pick up is normally set to 50 to 100 wt %, preferably 60 to 80 wt %. The temperature of the aqueous phosphorus-containing compound solution is not particularly limited, and may be, for example, room temperature.

In the present description, the pick up is defined as an add-on rate of the aqueous solution with respect to the weight of the raw material in dry state.

When a method of dipping the raw material in an aqueous solution and squeezing it is used as the method of adding the aqueous phosphorus-containing compound solution, the dipped raw material is squeezed until the pick up is achieved. The squeezing method for use is preferably a mangle-squeezing method from the view point of uniformity.

The aqueous phosphorus-containing compound solution may contain additional compounds conventionally used as flame retardants for fibers, pH adjusters, organic solvents and surfactants, if the object of the present invention is achieved.

Addition of a pH adjuster is effective for retaining the fabric strength of the flame-retarded raw material and for adjusting a pH of the aqueous solution to neutrality. A pH adjuster used is an amine compound described below, preferably ammonia. For example, if a vinyl phosphate compound (1) is used in an amount of 25 to 35 wt % and ammonia is used as the pH adjuster, the ammonia is used at a concentration of less than 3 wt %, in particular of 0.5 to 2 wt %.

Examples of the organic solvents for use include methanol, ethanol, 1-propanol, 2-propanol, n-butanol, dimethylformamide, dioxane, dimethylsulfoxide, benzene, toluene, xylene and the like.

In the phosphorus processing step, an aging treatment is preferably carried out after the phosphorus treatment.
The aging treatment is a treatment to promote the reaction by keeping the processing solution in a temperature state raised to some extent, for example at 20 to 50°C. It is possible in this way to bring the reaction between the cellulosic fiber and the phosphorus-containing compound into the saturation state. For example, the raw material to which the aqueous processing agent solution is added is stored for about 1 minute to 24 hours. In the present embodiment, an additional radiation treatment is preferably carried out, after the phosphorus processing step, in particular after the aging treatment in the phosphorus processing step and before the water washing treatment. The treatment promotes chemical binding of the phosphorus-containing compound to the fibrous material, enabling more effective expression of preferable flame retardance. The additional radiation treatment may be carried out by a method similar to that in the radiation processing step before the phosphorus processing step. An aging treatment is more preferably carried out, immediately after the additional radiation treatment.

### Amine processing step

An amine compound is then added to the fibrous material. The amine compound reacts with the phosphorus-containing compound regions bound to the cellulosic fiber rapidly, consequently forming ionic bonds.

The amine compound is an amino-group-containing polymer that can form ammonium ion in water.

The ammonium ion group [-N⁺(R)₃] of the amine compound generated in water is a monovalent positive group. On the other hand, the phosphorus-containing compound region bound to the cellulosic fiber, for example the -OR³ group in General Formulae (A1) and (B1) above, generates a monovalent negative group [-O⁻ group] in water. Thus, these groups bind to each other electrically, resulting in formation of ionic bonds between the amine compound and the phosphorus-containing compound region.

An amino-group-containing polymer is used as the amine compound, and typical preferable examples thereof include polyethyleneimine, polyallylamine, dicyandiamide-formalin condensates, dicyandiamide-alkylene (polyamine) condensates and the like. The molecular weight of the amino-group-containing polymer is not particularly limited, if it is soluble in water at a particular concentration, and normally 300 to 100,000, particularly 500 to 5000, as weight-average molecular weight. The weight-average molecular weight in the present description is a value determined by a chromatographic method.

Polyethyleneimines are available, for example, as Epomin SP series products manufactured by Nippon Shokubai Co., Ltd. Typical examples thereof include Epomin SP-003, SP-006, SP-012, SP-018, SP-200, P-1000 and the like.

Polyallylamines are available, for example, as PAA series products manufactured by Nitto Boseki Co. Ltd. Typical examples thereof include PAA-O1, PAA-03, PAA-05, PAA-08, PAA-15C, PAA-25 and the like.

The dicyandiamide-formalin condensates are available, for example, as Neofix F manufactured by Nicca Chemical Co., Ltd.

The dicyandiamide-alkylene (polyamine) condensates are available, for example, as Fix SK-30 manufactured by Satoda Chemical Industrial Co., Ltd.

One or more compounds selected from amino-group-containing polymers (in particular, polyethyleneimine, polyallylamine and dicyandiamide-formalin condensates) are used as the amine compounds, for further improvement in flame retardancy and in hand feeling of the treated fibrous material.

If the crosslinking step is carried out, the amine compound is preferably a primary or secondary amine compound, and, for example, use of polyallylamine as a primary amine or polyethyleneimine as a secondary amine is preferable.

The amine compound is normally added to the fibrous material in the form of aqueous solution. The concentration of the amine compound in the aqueous solution is not particularly limited, if the object of the present invention is achieved, and may be, for example, about 5 to 30 wt % with respect to the total amount of the aqueous solution. An amine compound may be used alone, or two or more amine compounds may be used in combination. If two or more amine compounds are used, the total amount thereof is preferably in the range above.

The method of adding the amine compound is not particularly limited, if the raw material is dipped with the aqueous solution, and an addition method similar to that of the phosphorus-containing compound may be adopted. For example, it is preferable to use of a method of treating the raw material in an aqueous solution at a particular temperature (40 to 80°C) for a particular period (10 to 120 minutes), a method of dipping the raw material in an aqueous solution, squeezing it, and treating it at a particular temperature (30 to 70°C) for a particular period (1 to 24 hours), or a method of dipping the raw material in an aqueous solution and squeezing it.

The pick up of the aqueous amine compound solution into the raw material is not particularly limited, if the object of the present invention is achieved, and normally, the pick up may be smaller, when the amine compound concentration in the aqueous solution is higher. On the other hand, when the amine compound concentration is lower, the pick up is set to a larger value. For example, when the concentration of the aqueous solution is set to the concentration described above, the pick up is normally set to 50 to 100 wt %, preferably 60 to 80 wt %. The temperature of the aqueous amine compound solution is not particularly limited, and may be, for example, room temperature.

When a method of dipping the raw material in an aqueous solution and squeezing it is used as the method of adding the aqueous amine compound solution, the dipped raw material is squeezed until the pick up above is achieved, and the squeezing method for use is preferably a mangle-squeezing method.

The aqueous amine compound solution may contain organic solvents and surfactants, if the object of the present invention is achieved. The organic solvents for use are those similar to the organic solvents that may be contained in the aqueous phosphorus-containing compound solution.

In the amine processing step, an aging treatment is carried out after the amine treatment by a method similar to that in the phosphorus processing step and preferably a water-washing treatment is additionally carried out. The aging treatment brings the reaction between the phosphorus-containing compound regions bound to the cellulosic fiber and the amine compound into the saturation state. The water-washing treatment can remove the unreacted phosphorus-containing compound and the processing agents such as amine compound.

After the water-washing treatment, normally drying is carried out. The drying is performed, for example, by storing the fibrous material at 20 to 85°C for 0.5 to 24 hours.

In the present embodiment, an additional radiation treatment is preferably carried out between the phosphorus processing step and the amine processing step, in particular after aging treatment of the phosphorus processing step and before the amine processing step. The treatment promotes chemical binding of the phosphorus-containing compound to the fibrous material, enabling more effective expression of flame retardance. The additional radiation treatment can be performed by a method similar to that in the radiation processing step described above. An aging treatment is more preferably carried out, immediately after the additional radiation treatment by a method similar to the aging treatment in the phosphorus processing step.

### Second embodiment

The second embodiment of the present invention employs the order (2). Hereinafter, each step in the second embodiment will be described, but the each step is identical with that in the first embodiment, except that the operational order is different, unless otherwise indicated.

### Amine processing step

First in the embodiment, an amine compound is added to the fibrous material. The amine compound added in this step reacts rapidly with the phosphorus-containing compound regions bound to the cellulosic fiber in the subsequent radiation and also phosphorus processing steps, if it is present on the surface of the cellulosic fiber.

In the present step, an aging treatment is preferably carried out after amine treatment, by a method similar to the aging treatment in the phosphorus processing step of the first embodiment, but a water-washing treatment is preferably eliminated. It is because the water-washing treatment removes the amine compound from the fibrous material. The aging treatment allows effective retention of the amine compound in the fibrous material.

### Radiation processing step

A radiation is then irradiated to the fibrous material. It generates radicals on the cellulosic fiber even in the presence of the amine compound, and the phosphorus-containing compound possibly binds to the fibrous material in addition reaction of the radically polymerizable groups in the phosphorus processing step.

### Phosphorus processing step

A phosphorus-containing compound is then added to the fibrous material. Even in the presence of the amine compound, the radicals generated on the fiber in the previous step as the start points transfer to the radically polymerizable groups of the phosphorus-containing compound, consequently causing chemical binding between the phosphorus-containing compounds and the cellulosic fiber and reaction of the amine compound to the bound phosphorus-containing compound regions.

In the present step, an aging treatment is carried out after the phosphorus treatment by a method similar to the aging treatment in the phosphorous processing step of the first embodiment and preferably a water-washing treatment is additionally carried out. The aging treatment brings the reaction between the phosphorus-containing compound regions bound to the cellulosic fiber and the amine compound into the saturation state and also the reaction between the phosphorus-containing compound regions bound to the cellulosic fiber and the amine compound into the saturation state. The water-washing treatment removes the unreacted phosphorus-containing compound and the processing agents such as amine compounds. After the water-washing treatment, normally drying is carried out. The drying is performed, for example, by storing the fibrous material at 20 to 85°C for 0.5 to 24 hours.

In the present embodiment, an additional radiation treatment is preferably carried out again after the phosphorus processing step, in particular after aging treatment in the phosphorus processing step and before the water-washing treatment. The treatment promotes chemical binding of the phosphorus-containing compound to the fibrous material and reaction of the phosphorus-containing compound region to the amine compound, enabling more effective expression of flame retardance. The additional radiation treatment can be performed by a method similar to that in the radiation processing step of the first embodiment. An aging treatment is more preferably carried out immediately after the additional radiation treatment by a method similar to that in the phosphorus processing step of the first embodiment.

### Third embodiment

The third embodiment of the present invention employs the order (3). Hereinafter, each step in the third embodiment will be described, but the each step is identical with that in the first embodiment, except that the operational order is different, unless otherwise indicated.

### Radiation processing step

First in the present embodiment, a radiation is irradiated to the fibrous material. It generates radicals on the cellulosic fiber, enabling the phosphorus-containing compound to bind chemically to the cellulosic fiber in addition reaction by the radically polymerizable groups in the single-bath processing step described below.

### Single-bath processing step

A phosphorus-containing compound and an amine compound are then added to the cellulosic fiber material simultaneously. The phosphorus treatment of binding the phosphorus-containing compound to the cellulosic fiber and the amine treatment of reacting the bound phosphorus-containing compound region with the amine compound are carried out in a single bath.

The single-bath processing method is the same as the processing method in the phosphorus processing step of the first embodiment, except that the amine compound used in the amine processing step of the first embodiment is mixed with and dissolved in the aqueous phosphorus-containing compound solution. For example, the aqueous solution used in the single-bath treatment is the same as the aqueous phosphorus-containing compound solution used in the phosphorus processing step of the first embodiment, except that the amine compound used in the amine processing step is mixed with and dissolved in the aqueous phosphorus-containing compound solution. In this way, the phosphorus-containing compound binds chemically to the cellulosic fiber in addition reaction by the radically polymerizable groups and the phosphorus-containing compound regions bound to the cellulosic fiber react with the amine compound rapidly.

The amine compound concentration in the aqueous solution used in this step is the same as that of the aqueous amine compound solution used in the amine processing step of the first embodiment.

In the present step, an aging treatment is carried out after single-bath treatment by a method similar to the aging treatment in the phosphorus processing step of the first embodiment, and preferably a water-washing treatment is additionally carried out. The aging treatment brings the reaction between the cellulosic fiber and the phosphorus-containing compound into the saturation state and also the reaction between the phosphorus-containing compound regions bound to the cellulosic fiber and the amine compound into the saturation state. The water-washing treatment removes the unreacted phosphorus-containing compound and the processing agents such as amine compounds. After the water-washing treatment, normally drying is carried out. The drying is performed, for example, by storing the fibrous material at 20 to 85°C for 0.5 to 24 hours.

In the present embodiment, an additional radiation treatment is preferably carried out after the single-bath processing step, in particular after aging treatment in the single-bath processing step and before water-washing treatment. The treatment promotes chemical binding of the phosphorus-containing compound to the fibrous material and reaction of the phosphorus-containing compound regions to the amine compound, enabling more effective expression of flame retardance. The additional radiation treatment can be performed by a method similar to that in the radiation processing step of the first embodiment. An aging treatment is more preferably carried out immediately after the additional radiation treatment by a method similar to the aging treatment in the phosphorus processing step of the first embodiment.

### EXAMPLES

### Experimental Example A; order (1)

### Example 1A

A mercerized 100% cotton fabric was irradiated onto one face with electron beam at an exposure dose of 40 kGy by means of an electrocurtain-type electron beam irradiation equipment EC250/15/180L (Iwasaki Electric Co., Ltd.) under nitrogen atmosphere. The fabric irradiated with the electron beam was dipped in an aqueous solution containing mono(2-methacryloyloxyethyl) phosphate (manufactured by Kyoeisha Chemical Co., Ltd.; trade name: Light-Ester P-1M; hereinafter, referred to as "P1M") and ammonia mixed and dissolved therein respectively in amounts of 30 wt % and 1.2 wt % (aqueous phosphorus-based agent solution), and the fabric was squeezed with a mangle to a pick up of approximately 70 wt % % and aged at 35°C for 18 hours. Additionally, the fabric was irradiated once again onto the other unirradiated face with electron beam at an exposure dose of 40 kGy by means of the electrocurtain-type electron beam irradiation equipment EC250/15/180L (Iwasaki Electric Co., Ltd.) under nitrogen atmosphere. After irradiation, the fabric was aged at 35°C for 2 hours. The fabric was then washed with water for removal of unreacted agents. Subsequently, the fabric was dipped in an aqueous solution containing polyethyleneimine (manufactured by Nippon Shokubai Co., Ltd. Co., Ltd.; trade name: Epomin SP-006; hereinafter referred to as "SP006") mixed and dissolved in an amount of 10 wt % (aqueous amine-based agent solution), squeezed with a mangle to a pick up of approximately 70 wt % to the fabric, and aged at 35°C for 18 hours. The fabric was then washed with water for removal of unreacted agents, and dried at 80°C for 1 hour.

### Examples 2A to 8A

A treatment similar to that in Example 1A was carried out, except that an aqueous phosphorus-based agent solution and an aqueous amine-based agent solution respectively having compositions shown in Table 1 were used.

### Example 9A

A treatment similar to that in Example 1A was carried out, except that P-1M was replaced with bis(2-methacryloyloxyethyl) phosphate (manufactured by Kyoeisha Chemical Co., Ltd.; trade name: Light-Ester P-2 M; hereinafter referred to as "P2M").

### Comparative Example 1A

A treatment similar to that in Example 1A was carried out, except that the fabric was not treated with the aqueous amine-based agent solution.

### Comparative Example 2A

A treatment similar to that in Example 1A was carried out, except that no electron beam treatment was carried out.

### Evaluation

### Flame retardance

The flame retardance was evaluated by using a treated fabric that was previously processed in a particular washing test and dried. In the washing test, the fabric was washed 30 times or 50 times, by a method according to the approval standard of the incorporated foundation of Japan Fire Retardant Association. In the flame retardance test, carbonization length was measured by a test method in accordance with the combustibility test method approved by the incorporated foundation of Japan Fire Retardant Association for evaluation of flame-proofed fabric and other products (so-called vertical methane burner method). Fabrics not completely burned were ranked as "○", and those completely burned as "×". The carbonization length [mn] is specifically the length of the combustion area of the sample, and shorter length means higher flame retardance.

### Phosphorus content

The phosphorus content of the treated fabric was determined by using a scanning fluorescent X-ray analyzer ZSX 100e (manufactured by Pigaku Corporation).

### Hand feeling

The hand feeling of the treated fabric was evaluated.
○; Very soft in hand-feeling of the fabric and suitable for use as clothing;
Δ; Soft in hand-feeling of the fabric and usable as clothing;
×; Hard in hand-feeling of the fabric and not usable as clothing.

**[Table 1]**

| aftertreatment | | | | | | | | |
|---|---|---|---|---|---|---|---|---|
| | aqueous phosphorus-based agent solution | | aqueous amine-based agent solution | | flame retardance* (carbonization length(mm]) | | phosphorus content (wt%) | hand feeling |
| | agents | concentration[%] the other is water | agents | concentration[%] the other is water | 30 times of washing | 50 times of washing | | |
| Example 1A | P1M + ammonia | 30+1.2 | SP006 | 10 | - | ○ (43) | 0.9 | ○ |
| Example 2A | P1M + ammonia | 30+1.2 | SP006 | 20 | - | ○ (50) | 0.9 | ○ |
| Example 3A | P1M | 30 | SP006 | 20 | - | ○ (70) | 0.9 | ○ |
| Example 4A | P1M + ammonia | 30+1.2 | SP012 | 10 | - | ○ (53) | 0.9 | ○ |
| Example 5A | P1M + ammonia | 30+1.2 | SP012 | 20 | - | ○ (44) | 0.9 | ○ |
| Example 6A | P1M | 30 | SP012 | 20 | - | ○ (60) | 0.9 | ○ |
| Example 7A | P1M + ammonia | 30+12 | PAPA03 | 4 | - | ○ (35) | 0.9 | ○ |
| Example 8A | P1M + ammonia | 30+1.2 | Neofix F | 20 | - | ○ (20) | 0.9 | ○ |
| Example 9A | P2M + ammonia | 30+0.8 | PAA03 | 4 | - | ○ (80) | 0.8 | ○ |
| Comparative Example 1 A | P1M + ammonia | 30+1.2 | - | - | × | × | 0.9 | ○ |
| Comparative Example 2A** | P1M + ammonia | 30+1.2 | SP006 | 10 | × | × | 0.9 | ○ |

| | | | | | | | | |
|---|---|---|---|---|---|---|---|---|
| * Flame retardance shows the evaluation result after the washing test. ** No electron beam treatment was carried out. | | | | | | | | |

### Experimental Example B; order (2)

### Example 1B

A mercerized 100% cotton fabric was dipped in an aqueous solution of polyethylene imine (manufactured by Nippon Shokubai Co., Ltd.; trade name: Epomin SP-006; hereinafter referred to as "SP006") mixed and dissolved at a concentration of 20 wt % (aqueous amine-based agent solution), squeezed with a mangle to a pick up of approximately 70 wt %, and aged at 35°C for 18 hours. The fabric was then irradiated on one face with electron beam at an exposure dose of 40 kGy by means of an electrocurtain-type electron beam irradiation equipment EC250/15/180L (Iwasaki Electric Co., Ltd.) under nitrogen atmosphere. The fabric irradiated with electron beam was dipped in an aqueous solution containing mono(2-methacryloyloxyethyl) phosphate (manufactured by Kyoeisha Chemical Co., Ltd.; trade name: Light-Ester P-1 M; hereinafter, referred to as "P1M") at 30 wt % and ammonia at 1.2 wt % mixed and dissolved (aqueous phosphorus-based agent solution), squeezed with a mangle to a pick up of approximately 70 wt %, and dried at 35°C for 18 hours. Then, the fabric was irradiated once again onto the other unirradiated face with electron beam at an exposure dose of 40 kGy by means of the electrocurtain-type electron beam irradiation equipment EC250/15/180L (Iwasaki Electric Co., Ltd.) under nitrogen atmosphere. After irradiation, the fabric was aged at 35°C for 2 hours. The fabric was then washed with water for removal of unreacted agents and dried at 80°C for 1 hour.

### Examples 2B to 4B

A treatment similar to that in Example 1B was carried out, except that an aqueous amine-based agent solution and an aqueous phosphorous-based agent solution having the composition shown in Table 2 were used.

### Evaluation

Evaluation was performed by a method similar to those in Experimental Example A, except that the flame retardance was evaluated by the following method.

### (Flame retardance)

The flame retardance was evaluated by using a treated fabric that was previously subjected to a particular hot water test and then dried. In the hot water test, the fabric was shaken in aqueous 0.3 wt % calcium chloride solution at a bath ratio of 30: 1 at 60°C for 2 hours. The flame-retardant test method was the same as that used in Experimental Example A.

**[Table 2]**

| pretreatment | | | | | | | |
|---|---|---|---|---|---|---|---|
| | aqueous amino-based agent solution | | aqueous phosphorus-based agent solution | | flame retardance** (carbonization length[mm]) | phosphorus content (wt%) | hand feeling |
| | agents | concentration [%] the other is water | agents | concentration[%] the other is water | | | |
| Example 1B | SP006 | 20 | P1M + ammonia | 30+1.2 | ○ (135) | 0.9 | ○ |
| Example 2B | SP012 | 20 | P1M + arnmonia | 30+1.2 | ○ (104) | 0.9 | ○ |
| Example 3B | SP018 | 20 | P1 M + ammonia | 30+1.2 | ○ (90) | 0.9 | ○ |
| Example 4B | PAA03 | 20 | P1 M + ammonia | 30+1.2 | ○ (40) | 0.9 | ○ |

| | | | | | | | |
|---|---|---|---|---|---|---|---|
| ** Flame retardance shows the evaluation result after the hot water test. | | | | | | | |

### Experimental Example C; order (3)

### Reference Example 1C

A mercerized 100% cotton fabric was irradiated onto one face with electron beam at an exosure dose of 40 kGy by means of an electrocurtain-type electron beam irradiation equipment EC250/15/180L (Iwasaki Electric Co., Ltd.) under nitrogen atmosphere. The fabric irradiated with the electron beam was dipped in an aqueous solution containing mono(2-methacryloyloxyethyl) phosphate (manufactured by Kyoeisha Chemical Co., Ltd.; trade name: Light-Ester P-1M; hereinafter, referred to as "P1M") at 50 wt % and ammonia at 15 wt % mixed and dissolved therein (aqueous mixed agent solution), squeezed with a mangle to a pick up of approximately 70 wt % to the fabric, and aged at 35°C for 18 hours. Additionally, the fabric was irradiated once again onto the other unirradiated face with electron beam at an exosure dose of 40 kGy by means of the electrocurtain-type electron beam irradiation equipment EC250/15/180L (Iwasaki Electric Co., Ltd.) under nitrogen atmosphere. After irradiation, the fabric was aged at 35°C for 2 hours, washed with water for removal of unreacted agents, and then dried at 80°C for 1 hour.

### Reference Examples 2C to 10C and Examples 11C to 14C

A treatment similar to that in Example 1C was carried out, except that an aqueous mixed agent solution having the composition shown in Table 3 was used.

### Evaluation

Evaluation was performed by methods similar to those in Experimental Example A.

**[Table 3]**

| treatment in the same bath | | | | | | |
|---|---|---|---|---|---|---|
| | aqueous solution containing mixed agent | | flame retardance* (carbonization length[mm]) | | phosphorus content (wt%) | hand feeling |
| | agents | concentration [%] the other is water | 30 times of washing | 50 times of washing | | |
| Reference Example 1C | P1 M + ammonia | 50+4.2 | ○ (42) | × (all burnt) | 1.8 | × |
| Reference Example 2C | P1 M + ammonia | 55+4.8 | ○ (44) | ○ (48) | 2 | × |
| Reference Example 3C | P1M + glycine + ammonia | 55+15+17 | ○ (49) | × (all burnt) | 1.8 | × |
| Reference Example 4C | P1M + guanidine carbonate | 55+25 | ○ (46) | ○ (40) | 1.8 | × |
| Reference Example 5C | P1M + monoethanolamine | 55+15 | ○ (49) | × (all burnt) | 1.8 | × |
| Reference Example 6C | P1M + ethylenediamine | 30+4.3 | ○ (44) | × (all burnt) | 0.9 | ○ |
| Reference Example 7C | P1M + ethylenediamine | 40+5.8 | ○ (29) | ○ (24) | 1.1 | Δ |
| Reference Example 8C | P1M + ethylenediamine | 50+7.2 | ○ (28) | ○ (29) | 1.4 | × |
| Reference Example 9C | P1M + hexamethylenediamine | 30+8.4 | 0(57) | × (all burnt) | 0.9 | ○ |
| Reference Example 10C | P1M + hexamethylenediamine | 40+11.2 | ○ (33) | ○ (27) | 1.1 | Δ |
| Example 11 C | P1M + SP012 | 30+7.5 | ○ (31) | ○ (99) | 0.9 | ○ |
| Example 12C | P1M + SP012 | 40+10 | ○ (35) | ○ (65) | 1.1 | Δ |
| Example 13C | P1M + PAA03 | 30+3 | ○ (33) | ○ (105) | 0.9 | ○ |
| Example 14C | P1M + PAA03 | 40+4 | ○ (30) | ○ (67) | 1.1 | Δ |

| | | | | | | |
|---|---|---|---|---|---|---|
| *Flame retardance shows the evaluation result after the washing test. | | | | | | |

### Example 1D

A treatment similar to that in Example 1A was carried out, except that an aqueous amine-based agent solution containing 10 wt % polyallylamine (manufactured by Nitto Boseki Co., Ltd.; trade name: PAA03; molecular weight: 3000; hereinafter referred to as "PAA03") was used.

### Examples 5D, 9D and 13D

A treatment similar to that in Example 1D was carried out, except that an aqueous amine-based agent solution having the composition shown in Table 4 was used.

### Example 2D

A mercerized 100% cotton fabric was irradiated onto one face with electron beam at an exosure dose of 40 kGy in an electrocurtain-type electron beam irradiation equipment EC250/15/180L (Iwasaki Electric Co., Ltd.) under nitrogen atmosphere. The fabric irradiated with the electron beam was dipped by an aqueous solution containing "P1M" at 30 wt % and ammonia at 1.2 wt % mixed and dissolved therein (aqueous phosphorus-based agent aqueous solution), squeezed with a mangle to a pick up of approximately 70 wt %, and aged at 35°C for 18 hours. Additionally, the fabric was irradiated once again onto the other unirradiated face with electron beam at anexosure dose of 40 kGy by means of the electrocurtain-type electron beam irradiation equipment EC250/15/180L (Iwasaki Electric Co., Ltd.) under nitrogen atmosphere. After irradiation, the fabric was aged at 35°C for 2 hours. The fabric was then washed with water for removal of unreacted agents. Subsequently, the fabric was dipped in an aqueous solution containing "PAA-03" at 10 wt % mixed and dissolved therein (aqueous amine-based agent solution), squeezed with a mangle to a pick up of approximately 70 wt % % to the fabric, and aged at 35°C for 18 hours. The fabric was then washed with water for removal of unreacted agents and dried at 80°C for 1 hour. Then, the fabric was dipped in an aqueous solution containing polyglycerol polyglycidyl ether (manufactured by Nagase Chemtex Co., Ltd.; trade name: EX-313; hereinafter, referred to as "EX-313") at 2.5 wt % mixed and dissolved therein (aqueous crosslinking agent solution), squeezed with a mangle to a pick up of approximately 70 wt % to the fabric , and treated at 130°C for 90 seconds.

### Examples 3D, 4D, 6D to 8D, 10D to 12D, and 14D to 16D

A treatment similar to that in Example 2D was carried out, except that an amine-based agent and a crosslinking agent having the composition shown in Table 4 were used. "PAA-05" represents a polyallylamine (manufactured by Nitro Boseki Co., Ltd.; trade name: PAA-05; molecular weight: 5000).

### Evaluation

Evaluation was made by methods similar to those in Example A. Results are shown in Table 4. In Examples 3D, 4D, 6D to 8D, 10D to 12D and 14D to 16D which were subjected to the crosslinking step, the amine compounds, which were crosslinked, were added to the fibrous material more tightly and improved the durability in flame retardance of the fibrous material compared to Examples 5D, 9D and 13D that were not subjected to the crosslinking step.

**[Table 4]**

| | aqueous phosphorus-based agent solution | | aqueous amine-based agent solution | | aqueous crosslinking agent solution | | flame retardance* (carbonization length[mm]) | phosphorus content (wt%) | hand feeling |
|---|---|---|---|---|---|---|---|---|---|
| | agents | concentration [%] the other is water | agents | concentration[%] the other is water | agents | concentration [%] the other is water | 50 times of washing | | |
| Exam ple 1D | P1M + ammonia | 30+1.2 | PAA-03 | 10 | EX-313 | 0 | ○ (50) | 0.9 | ○ |
| Example 2D | P1M + ammonia | 30+1.2 | PAA-03 | 10 | EX-313 | 2.5 | ○ (10) | 0.9 | ○ |
| Example 3D | P1M + ammonia | 300+1.2 | PAA-03 | 10 | EX-313 | 5 | ○ (11) | 0.9 | ○ |
| Example 4D | P1M + ammonia | 30+1.2 | PAA-03 | 10 | EX-313 | 10 | ○ (24) | 0.9 | ○ |
| Example 5D | P1M + ammonia | 30+1.2 | PAA-03 | 20 | EX-313 | 0 | ○ (40) | 0.9 | ○ |
| Example 6D | P1M + ammonia | 30+1.2 | PAA-03 | 20 | EX-313 | 2.5 | ○ (11) | 0.9 | ○ |
| Example 7D | P1M + ammonia | 30+1.2 | PAA-03 | 20 | EX-313 | 5 | ○ (12) | 0.9 | ○ |
| Example 8D | P1M + ammonia | 30+1.2 | PAA-03 | 20 | EX-313 | 10 | ○ (26) | 0.9 | ○ |
| Example 9D | P1M + ammonia | 30+1.2 | PAA-05 | 10 | EX-313 | 0 | ○ (50) | 0.9 | ○ |
| Example 10D | P1M + ammonia | 30+1.2 | PAA-05 | 10 | EX-313 | 2.5 | ○ (12) | 0.9 | ○ |
| Example 11D | P1M + ammonia | 30+1.2 | PAA-05 | 10 | EX-313 | 5 | ○ (11) | 0.9 | ○ |
| Example 12D | P1M + ammonia | 30+1.2 | PAA-05 | 10 | EX-313 | 10 | ○ (27) | 0.9 | ○ |
| Example 13D | P1M + ammonia | 30+1.2 | PAA-05 | 20 | EX-313 | 0 | ○ (40) | 0.9 | ○ |
| Example 14D | P1M + ammonia | 30+1.2 | PAA-05 | 20 | EX-313 | 2.5 | ○ (11) | 0.9 | ○ |
| Example 15D | P1M + ammonia | 30+1.2 | PAA-05 | 20 | EX-313 | 5 | ○ (13) | 0.9 | ○ |
| Example 16D | P1M + ammonia | 30+1.2 | PAA-05 | 20 | EX-313 | 10 | ○ (26) | 0.9 | ○ |

| | | | | | | | | | |
|---|---|---|---|---|---|---|---|---|---|
| *Flame retardance shows the evaluation result after the washing test. | | | | | | | | | |

## Claims

1. A flame-retardant processing method, comprising:
a radiation processing step of irradiating a cellulosic fiber material with radiation;
a phosphorus processing step of adding a radically polymerizable phosphorus-containing compound to the cellulosic fiber material; and
an amine processing step of adding an amine compound to the cellulosic fiber material,
wherein the amine compound is an amino-group-containing polymer which is able to form ammonium ion in water,
wherein the phosphorus processing step is carried out after the radiation processing step, and
wherein the amine processing step is carried out before the radiation processing step, at the same time in the same bath as the phosphorus treatment step, or after the phosphorus treatment step.

2. The flame-retardant processing method of Claim 1, further comprising a crosslinking step in which a crosslinking compound is added to the cellulosic fiber material after the radiation processing step, the phosphorus processing step and the amine processing step.

3. The flame-retardant processing method of Claim 2, wherein the crosslinking compound is selected from multifunctional epoxy group-containing compounds, glyoxal resins or a mixture thereof.

4. A flame-retarded cellulosic fiber material, obtainable by the flame-retardant processing method of any one of Claims 1 to 3.

5. A flame-retarded cellulosic fiber material, wherein a radically polymerizable phosphorus-containing compound is bound to a cellulosic fiber in addition reaction and an amine compound is bound ionically to the bound and radically polymerizable phosphorus-containing compound,
wherein the amine compound is an amino-group-containing polymer which is able to form ammonium ion in water.

6. The cellulosic fiber material of Claim 4 or claim 5, wherein a phosphorus content is 2.0 wt % or less.

7. Use of a flame-retarding agent set for radiation treatment in the method of any one of Claims 1 to 3,
wherein the flame-retarding agent set comprises a radically polymerizable phosphorus-containing compound and an amine compound, and
wherein the amine compound is an amino-group-containing polymer which is able to form ammonium ion in water.

## Patentansprüche

1. Bearbeitungsverfahren zur Flammhemmung, umfassend:
einen Strahlungs-Bearbeitungsschritt zum Bestrahlen eines Cellulosefasermaterials mit Strahlung;
einen Phosphor-Bearbeitungsschritt, in dem eine radikalisch polymerisierbare Phosphor-haltige Verbindung zu dem Cellulosefasermaterial zugegeben wird; und
einen Amin-Bearbeitungsschritt, in dem eine Aminverbindung zu dem Cellulosefasermaterial zugegeben wird,
worin die Aminverbindung ein Aminogruppen-haltiges Polymer ist, welches in der Lage ist, in Wasser ein Ammoniumion zu bilden,
worin der Phosphor-Bearbeitungsschritt nach dem Bestrahlungs-Bearbeitungsschritt durchgeführt wird und
worin der Amin-Bearbeitungsschritt durchgeführt wird vor dem Strahlungs-Bearbeitungsschritt, gleichzeitig in dem gleichen Bad wie der Phosphor-Bearbeitungsschritt, oder nach dem Phosphor-Bearbeitungsschritt.

2. Bearbeitungsverfahren zur Flammhemmung gemäß Anspruch 1, ferner umfassend einen Vernetzungsschritt, worin eine Vernetzungsverbindung zu dem Cellulosefasermaterial nach dem Strahlungs-Bearbeitungsschritt, dem PhosphorBearbeitungsschritt und dem Amin-Bearbeitungsschritt zugegeben wird.

3. Bearbeitungsverfahren zur Flammhemmung gemäß Anspruch 2, worin die Vernetzungsverbindung ausgewählt ist aus multifunktionellen Epoxygruppen-haltigen Verbindungen, Glyoxalharzen oder einer Mischung hiervon.

4. Flammgehemmtes Cellulosefasermaterial, erhältlich durch das Bearbeitungsverfahren zur Flammhemmung gemäß irgendeinem der Ansprüche 1 bis 3.

5. Flammgehemmtes Cellulosefasermaterial, worin eine radikalisch polymerisierbare Phosphor-haltige Verbindung an eine Cellulosefaser in einer Additionsreaktion gebunden ist und eine Aminverbindung ionisch an die gebundene und radikalisch polymerisierbare Phosphor-haltige Verbindung gebunden ist,
worin die Aminverbindung ein Aminogruppen-haltiges Polymer ist, welches in der Lage ist, in Wasser ein Ammoniumion zu bilden.

6. Cellulosefasermaterial gemäß Anspruch 4 oder Anspruch 5, worin der Phosphorgehalt 2,0 Gew.% oder weniger beträgt.

7. Verwendung eines Sets von flammhemmenden Mitteln für die Bestrahlungsbehandlung in dem Verfahren gemäß irgendeinem der Ansprüche 1 bis 3,
worin das Set von flammhemmenden Mitteln eine radikalisch polymerisierbare Phosphor-haltige Verbindung und eine Aminverbindung umfasst und
worin die Aminverbindung ein Aminogruppen-haltiges Polymer ist, welches in der Lage ist, in Wasser ein Ammoniumion zu bilden.

## Revendications

1. Procédé de traitement d'ignifugation, comprenant :
une étape de traitement par rayonnement d'irradiation d'un matériau de fibre cellulosique avec un rayonnement ;
une étape de traitement au phosphore d'addition d'un composé contenant du phosphore radicalairement polymérisable au matériau de fibre cellulosique ; et
une étape de traitement à l'amine d'addition d'un composé d'amine au matériau de fibre cellulosique,
dans lequel le composé d'amine est un polymère contenant un groupe amino qui est apte à former un ion ammonium dans l'eau,
dans lequel l'étape de traitement au phosphore est réalisée après l'étape de traitement par rayonnement, et
dans lequel l'étape de traitement à l'amine est réalisée avant l'étape de traitement par rayonnement, au même moment dans le même bain que l'étape de traitement au phosphore, ou après l'étape de traitement au phosphore.

2. Procédé de traitement d'ignifugation selon la revendication 1, comprenant de plus une étape de réticulation dans laquelle un composé de réticulation est ajouté au matériau de fibre cellulosique après l'étape de traitement par rayonnement, l'étape de traitement au phosphore et l'étape de traitement à l'amine.

3. Procédé de traitement d'ignifugation selon la revendication 2, dans lequel le composé de réticulation est choisi parmi des composés contenant un groupe époxy multifonctionnels, des résines de glyoxal ou un mélange de ceux-ci.

4. Matériau de fibre cellulosique rendu ignifuge, pouvant être obtenu par le procédé de traitement d'ignifugation selon l'une quelconque des revendications 1 à 3.

5. Matériau de fibre cellulosique rendu ignifuge, dans lequel un composé contenant du phosphore radicalairement polymérisable est lié à une fibre cellulosique dans une réaction d'addition et un composé d'amine est lié ioniquement à la liaison et au composé contenant du phosphore radicalairement polymérisable,
dans lequel le composé d'amine est un polymère contenant un groupe amino qui est apte à former un ion ammonium dans l'eau.

6. Matériau de fibre cellulosique selon la revendication 4 ou la revendication 5, dans lequel une teneur en phosphore est de 2,0 % en masse ou inférieure.

7. Utilisation d'un jeu d'agent ignifuge pour un traitement par rayonnement dans le procédé selon l'une quelconque des revendications 1 à 3,
dans laquelle le jeu d'agent ignifuge comprend un composé contenant du phosphore radicalairement polymérisable et un composé d'amine, et
dans laquelle le composé d'amine est un polymère contenant un groupe amino qui est apte à former un ion ammonium dans l'eau.
